# EUROPÄISCHE PATENTSCHRIFT

(11) **EP 1 114 577 B1**
(45) Veröffentlichungstag und Bekanntmachung des Hinweises auf die Patenterteilung: **29.09.2004**
(21) Anmeldenummer: 00127616.1
(22) Anmeldetag: 16.12.2000
(51) Int. Cl.: A01D 75/28

(54) **Landwirtschaftliche Arbeitsmaschine mit Seitenhangausgleich**
Agricultural machine with compensation means for hillside working
Machine agricole munie de moyens de compensation pour le travail sur pente

(30) Priorität: 04.01.2000 DE 10000145
(43) Veröffentlichungstag der Anmeldung: 11.07.2001
(73) Patentinhaber: CLAAS Industrietechnik GmbH, 33106 Paderborn (DE)
(72) Erfinder: Dahm, Michael, 33175 Bad Lippspringe (DE); Verhorst, Jan Wilhelm, 33142 Büren (DE); Engenhorst, Werner, 33428 Harsewinkel (DE)

(56) Entgegenhaltungen:
- WO-A-89/00928
- DE-A- 3 420 233
- DE-A- 3 632 416
- DE-A- 19 823 347
- GB-A- 1 039 659
- US-A- 3 430 790
- US-A- 4 696 152
- US-A- 4 750 751

## Beschreibung

Die Anmeldung bezieht sich auf eine landwirtschaftliche Arbeitsmaschine mit einem Fahrzeugrahmen, einem Fahrerstand, einem Antriebsmotor, einer Vorder- und Hinterachse und landwirtschaftlichen Arbeitsorganen, zumindest eine der Achsen weist eine hydraulisch betätigbare Verstellvorrichtung zum zumindest teilweisen Ausgleich einer Hangneigung auf, wobei die Verstellvorrichtung aus zumindest zwei Parallellenkern besteht, die maschinenseitig jeweils um eine Drehachse schwenkbar angeordnet sind und radseitig an einem ortsveränderlichen Radträgergehäuse angreifen.

Eine gattungsgemäße Arbeitsmaschine ist beispielsweise aus der US 4,696,152 bekannt. Um die landwirtschaftlichen Arbeitsorgane in bergigem Gelände in einer nahezu waagerechten Position zu halten, ist vorgeschlagen, die Höhenlage der beiden Radträger einer Achse hangabhängig durch eine gegensinnige Verstellung von parallelen Doppelquerlenkern zu verändern, wodurch sich eine annähernd waagerechte Lage der Arbeitsmaschine ergibt, solange sich die Hangneigung innerhalb des Verstellbereichs der beiden Radträger bewegt. Eine andere gattungsgemäße Arbeitsmaschine mit vergleichbarer Funktion findet sich in US 4,534,575. Bei beiden Ausgestaltungen erweist es sich als nachteilig, dass die Doppelquerlenker in einem ungeschützen äußeren Bereich der Achse angeordnet sind. Außerdem sind die Achsen so konstruiert, dass der starre innenliegende Teil so kurz geraten ist, dass sie nicht den Rahmen der Karosse der Arbeitsmaschine ohne einen weiteren Hilfsrahmen abstützen können, ohne dabei die maximal zulässige Breite einer Arbeitsmaschine für Straßenfahrt über einen zulässigen Wert hinausgehend zu überschreiten.

Demgemäß ist es die Aufgabe der vorliegenden Erfindung, die Nachteile, die sich aus dem bekannten Stand der Technik ergeben, möglichst zu vermeiden.

Die Aufgabe wird gelöst durch die kennzeichnenden Merkmale des Hauptanspruchs. Weitere vorteilhafte Ausgestaltungen der Erfindungen ergeben sich aus den Merkmalen der Unteransprüche.

Durch die Erstreckung des Querträgers über die volle Maschinenbreite kann die Achskonstruktion auf einfache Weise gegen herkömmliche Starrachsen ausgetauscht werden, ohne in die Rahmenstruktur der landwirtschaftlichen Maschine eingreifen zu müssen. Es können identische Endabtriebe zur Befestigung der Räder verwendet werden, und auch übrige Komponenten wie Schaltgetriebe, hydrostatische Antriebe, Bremsen etc. können baugleich zu den Maschinenvarianten mit Starrachse gehalten werden. Außerdem können die Parallellenker durch die seitliche Befestigung am Querträger so geführt werden, dass sie zumindest teilweise gegen einen Kontakt mit Hindernissen geschützt sind. Außerdem verringert sich die Bodenfreiheit der Maschine über einen großen Teil der Breite des Querträgers allenfalls unerheblich. Wird der Querträger so ausgeführt, dass an ihm nicht nur an einer Seite die Parallellenker befestigt werden können, sondern mit zwei Wangen, die zwischen sich einen Spalt ausbilden, oder mit zwei Querträgern, zwischen denen die Parallellenker angeordnet werden, so können die auf den Parallellenkern lastenden Gewichte durch deren Befestigung an beiden Wangen oder Querträgem besser aufgefangen werden, und die Parallellenker liegen beidseitig geschützt in dem Spalt. Um eine mögliche Reibung zwischen dem Querträger und den Parallellenkern zumindest zu verringern, ist es vorteilhaft, als Gleitflächen ausgebildete Kontaktzonen auszubilden.

Da die absolute Maschinenbreite durch gesetzliche Vorgaben begrenzt ist und ein möglichst großer Querschnitt der Maschinenbreite für die Arbeitsfunktionen benötigt wird, andererseits aber keine. Kompromisse hinsichtlich der Reifenbreiten wegen Bodendruck und Traglasten eingegangen werden können, ist es vorteilhaft, als Kraftmittel zur Verstellung der Parallellenker einen oder mehrere Hydraulikzylinder einzusetzen, die maschinenseitig an dem Querträger oder der Karosse der Arbeitsmaschine und radseitig am Radträgergehäuse befestigt sind. Der radseitige Befestigungspunkt des Hydraulikzylinders kann sich in einem Bereich noch unterhalb der Anlenkpunkte der Parallellenker befinden. Dadurch ist ein maximaler Verstellweg für die Hanganpassung erzielbar. Außerdem können die Stützpunkte der Hydraulikzylinder so steil wie möglich gewählt werden, was Blindkräfte so weit wie möglich verringert. Bei einer annähernden Querlage der Hydraulikzylinder vor oder hinter dem Querträger sind diese ebenfalls überwiegend in einem Bereich angeordnet, in dem sie nicht durch Bodenunebenheiten und Hindernisse beschädigt werden können.

Um einen möglichst großen Verstellweg für die Querlenker zu erzielen, ist es ebenfalls vorteilhaft, wenn die Antriebswellen nicht zwischen den Parallellenkern, sondern seitlich beabstandet dazu angeordnet sind. Bei der Verwendung von teleskopierbaren Antriebswellen und mechanischen Antrieben können die seitlichen Abstandsdifferenzen des Radträgergehäuses zum Maschinenrahmen infolge der Verschwenkbewegung durch eine Verlängerung oder Verkürzung der Antriebswellen ausgeglichen werden. Wenn hydraulische oder elektrische Radnabenmotoren eingesetzt werden, kann die Antriebsenergie auch einfache Weise durch flexible Kabel oder Schläuche übertragen werden. Dabei ist eine geschützte Führung solcher Schläuche oder Kabel im innenliegenden Bereich zwischen den Parallellenkern möglich.

Um den möglichen Verstellweg der Räder bei einer gegebenen Geometrie des Maschinengehäuses zu vergrößern, ist es vorteilhaft, den Querträger so auszugestalten, dass dessen äußere Endbereiche in einer höheren horizontalen Ebene liegen als dessen mittlerer Teil. Eine solche Anordnung kann erzielt werden, wenn der Rahmen beispielsweise leicht V-förmig ausgebildet ist.

Werden die Verstellwege der Parallellenker durch stoßelastische Endanschläge begrenzt, kann die Maschine einen größeren Fahrkomfort aufweisen. Ein ähnlicher Effekt ist erzielbar, wenn der Hydraulikkreislauf der Hydraulikzylinder, die zur Verstellung der Räder dienen, oder diese selbst Mittel aufweisen, die Stoßbelastungen glätten. Als solche Mittel könnten beispielsweise Druckspeicher mit Gasblasen dienen, gegen die die Laststöße abgefedert werden. Die Druckspeicher könnten wahlweise zu- und abschaltbar ausgestaltet sein.

Die Erfindung wird nun anhand von Ausführungsbeispielen näher erläutert. Es zeigen:
Fig. 1 eine landwirtschaftliche Arbeitsmaschine in einer schematischen Ansicht von vorn,
Fig. 2 einen Querschnitt durch die Vorderachse entlang der Linie II-II in Fig. 1,
Fig. 3 einen Querschnitt durch die Vorderachse entlang der Linie III-III in Fig. 1.
Fig. 4 eine alternative Ausgestaltung mit einer winklig angestellten Achse,
Fig. 5 eine Ansicht von oben auf eine erfindungsgemäße Achskonstruktion.

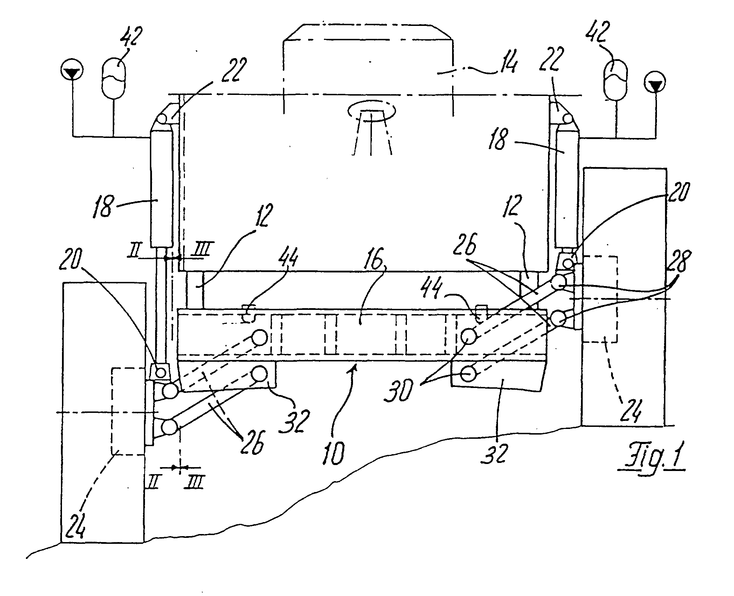

In Fig. 1 ist schematisch eine landwirtschaftliche Arbeitsmaschine 10, wie beispielsweise ein Mähdrescher, in einer Ansicht von vorn zu sehen. Die Arbeitsmaschine verfügt über einen Fahrzeugrahmen mit Längsträgern 12, einen Fahrerstand 14, einen nicht näher dargestellten Antriebsmotor, eine nicht näher dargestellte Hinterachse und die Vorderachse 16. Die Vorderachse 16 ist als Querträger ausgebildet, der sich über die volle Breite der Arbeitsmaschine 10 erstreckt. Eine solche Arbeitsmaschine 10 weist zusätzlich Arbeitsorgane auf, wie beispielsweise Dresch- und Trennaggregate, Häckselvorrichtungen, Speichervorrichtungen wie ein Korntank oder Tanks für Spritz- oder Düngemittel, die aber nicht näher dargestellt sind.

Für den Komfort des Fahrers, aber auch die Arbeitsleistung der Arbeitsmaschine kann es vorteilhaft sein, wenn eine annähernd waagerechte Lage der Maschine auch in abschüssigem Gelände erzielbar ist, indem die vertikale Lage der Räder entsprechend der Hangneigung gegensinnig verstellt wird. In dem in Fig. 1 dargestellten Ausführungsbeispiel erfolgt die Verstellung über zwei Hydraulikzylinder 18, die radseitig an einer Zylinderabstützung 20 und maschinenseitig über eine Lasche 22 mit dem Maschinenrahmen verbunden sind. Die Zylinderabstützung 20 ist mit einem Radträgergehäuse 24 verbunden, an dem schwenkbeweglich zwei Parallellenker 26 in Drehlagern 28 befestigt sind. Über Drehlager 30 sind die Parallellenker 26 wiederum mit der Vorderachse 16 verbunden. Bei Betätigung der Hydraulikzylinder 18 verändert sich die räumliche Lage der Radträgergehäuse 24 und dadurch auch der Parallellenker 26. Die in der Querschnittsperspektive gestrichelt dargestellten Teile der Parallellenker 26 sind vom Querträger der Vorderachse 16 verdeckt. Sie liegen somit weitgehend in einem geschützten Bereich, in dem sie nicht beschädigt werden können.

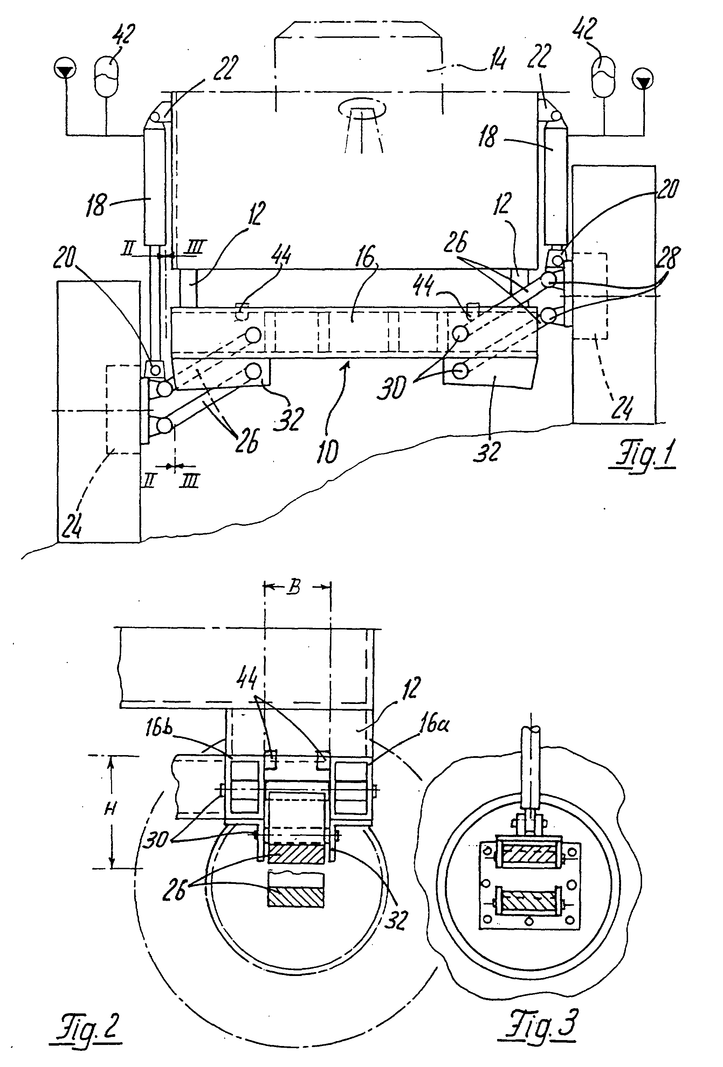

In Figur 2 ist erkennbar, dass die Vorderachse 16 aus zwei Querträgerelementen 16a und 16 b besteht, die zwischen sich einen Raum mit der Breite B und der Höhe H bilden. Die Höhe H ist nach unten verlängert durch ein Winkeleisen 32, das auf den Querträger 16a aufgesetzt ist. In dem Raum zwischen den Querträgern 16a, 16b können sich die Parallellenker 26 frei bewegen.

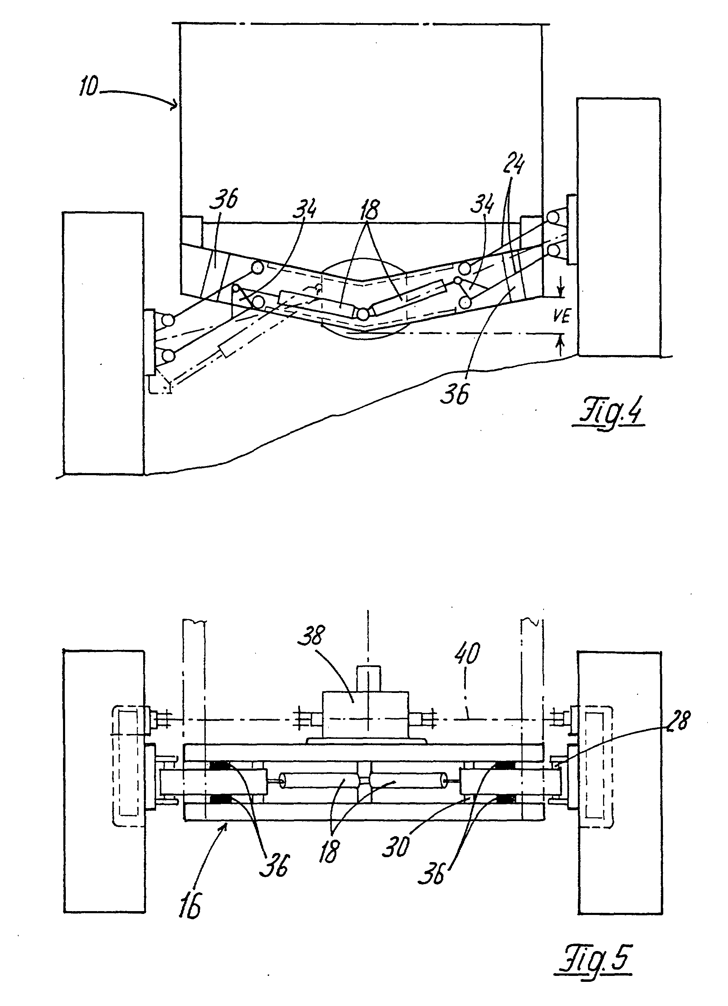

Figur 3 zeigt einen Blick auf das Radträgergehäuse 24, an dem obenendig der Hydraulikzylinder 18 an der Zylinderabstützung 20 angreift. Auch sind die Parallellenker 26 gut erkennbar.

Figur 4 zeigt eine alternative Ausgestaltung der Vorderachse 16. Die beiden Achshälften der Querträger 16a sind leicht in einem Winkel zueinander angestellt. Dadurch liegen die äußeren Endbereiche des Querträgers 16a in einer höheren horizontalen Ebene als der mittlere Teil des Querträgers 16a. Der Verstellbereich der Parallellenker 24 nach unten hin ist dadurch um den Betrag VE vergrößert. In diesem Ausführungsbeispiel greifen die Hydraulikzylinder 18 nicht direkt am Radträgergehäuse 26 an, sondern an Schwenklaschen 34, die direkt an den Parallellenkern 24 befestigt sind. An dem Querträger 16a sind Gleitlager 36 angebracht.

Figur 5 zeigt ein Ausführungsbeispiel in einem Blick von oben. Die Hydraulikzylinder 18 verstellen die räumliche Lage der Parallellenker 24, die über die Drehlager 28 entsprechend die räumliche Lage der Getriebegehäuse 26 verändern. Im rückwärtigen bereich der Vorderachse 16 ist ein Antriebselement 38 gezeigt, von dem aus die Antriebskraft über Kraftübertragungsmittel 40 in die Radträgergehäuse 26 übertragen wird. Das Antriebselement 38 kann ein Getriebe, aber auch ein Hydro- oder Elektromotor sein, und die Kraftübertragungsmittel 40 können aus teleskopierbaren Wellen, aber auch Hydraulikschläuchen oder elektrischen Kabeln bestehen, über die in den Radträgergehäusen angeordnete Radnabenmotoren antreibbar sind.

In Figur 1 sind Gasblasen 42 gezeigt, die als Federelemente zur Abfederung von Stößen dienen können. Auf einem Parallellenker 26 ist ein formelastisches Anschlagselement 44 gezeigt, das ebenfalls zur Dämpfung von Stößen wirkt. In Fig. 4 ist in gepunkteten Linien eine alternative Anordnung eines Hydraulikzylinders 18 gezeigt, die einen größeren Verstellbereich erlaubt.

## Patentansprüche

1. Landwirtschaftliche Arbeitsmaschine mit einem Fahrzeugrahmen, einem Fahrerstand, einem Antriebsmotor, einer Vorder- und Hinterachse und landwirtschaftlichen Arbeitsorganen, zumindest eine der Achsen weist eine hydraulisch betätigbare Verstellvorrichtung zum zumindest teilweisen Ausgleich einer Hangneigung auf, wobei die Verstellvorrichtung aus zumindest zwei Parallellenkern besteht, die maschinenseitig jeweils um eine Drehachse schwenkbar angeordnet sind und radseitig an einem ortsveränderlichen Radträgergehäuse angreifen,
**dadurch gekennzeichnet,**
**daß** die Parallellenker (26) maschinenseitig an zumindest einem Querträger (16a, 16 b) seitlich bezüglich der Längserstreckung des Querträgers befestigt sind, der sich quer im wesentlichen über die gesamte Breite des Maschinenrahmens so weit erstreckt, dass er die Längsträger (12) der Karosse der Arbeitsmaschine (10) abstützt, und der bei einer Bewegung der Parallellenker (26) überstrichene Raum zumindest teilweise in einer horizontalen Ebene mit dem Querträger (16a, 16b) liegt.

2. Arbeitsmaschine nach Anspruch 1,
**dadurch gekennzeichnet,**
**daß** die Parallellenker (26) zumindest bereichsweise zwischen zwei Querträgern (16a, 16b) geführt sind.

3. Arbeitsmaschine nach Anspruch 1 oder 2,
**dadurch gekennzeichnet,**
**daß** ein oder mehrere Hydraulikzylinder (18) maschinenseitig an einem Querträger (16a, 16b) oder der Karosse der Arbeitsmaschine und radseitig am Radträgergehäuse (24) befestigt ist.

4. Arbeitsmaschine nach einem der Ansprüche 1 bis 3,
**dadurch gekennzeichnet,**
**daß** die an den Radträgergehäusen (24) befestigten Räder über teleskopierbare Wellen, deren Drehbewegung über in dem Radträgergehäuse (24) angeordnete Zahnräder auf die Radschüssel übertragbar ist, antreibbar sind.

5. Arbeitsmaschine nach einem oder mehreren der Ansprüche 1 bis 4,
**dadurch gekennzeichnet,**
**daß** die an den Radträgergehäusen (24) befestigten Räder über hydraulische oder elektrische Radnabenmotoren antreibbar sind und die Antriebsenergie über flexible Schläuche oder Kabel übertragbar ist.

6. Arbeitsmaschine nach einem oder mehreren der Ansprüche 1 bis 5,
**dadurch gekennzeichnet,**
**daß** die äußeren Endbereiche eines Querträgers (16a , 16b) in einer höheren horizontalen Ebene liegen als der mittlere Teile eines Querträgers (16a, 16b).

7. Arbeitsmaschine nach einem oder mehreren der Ansprüche 1 bis 6,
**dadurch gekennzeichnet,**
**daß** der Verstellweg der Parallellenker (24) durch Anschläge begrenzt ist, die stoßelastische Mittel aufweisen.

8. Arbeitsmaschine nach einem oder mehreren der Ansprüche 1 bis 7,
**dadurch gekennzeichnet,**
**daß** in dem Hydraulikkreislauf zur Verstellung der Hydraulikzylinder (18) Mittel angeordnet sind, die Stoßbelastungen glätten.

9. Arbeitsmaschine nach einem oder mehreren der Ansprüche 1 bis 8,
**dadurch gekennzeichnet,**
**daß** zwischen den Parallellenkern (24) und den den Parallellenkern zugewandten Flächen der Querträger (16a, 16b) Gleitflächen angeordnet sind.

10. Arbeitsmaschine nach einem oder mehreren der Absprüche 1 bis 9,
**dadurch gekennzeichnet,**
**daß** der oder die Hydraulikzylinder (18) zumindest teilweise seitlich in einer horizontalen Lage zum Querträger (16a, 16b) liegen.

## Claims

1. An agricultural working machine comprising a vehicle chassis, a driving position, a drive engine, a front and a rear axle and agricultural working implements, at least one of the axles has a hydraulically actuable adjusting device for at least partially compensating for the angle of a slope, wherein the adjusting device comprises at least two parallel links which at the machine end are each arranged pivotably about a respective pivot axis and at the wheel end engage a variable-position wheel support housing,
**characterised in that**
at the machine end the parallel links (26) are secured to at least one transverse bearer (16a, 16b) laterally with respect to the longitudinal extent of the transverse bearer which extends transversely substantially over the entire width of the machine chassis to such an extent that it supports the longitudinal bearers (12) of the body of the working machine (10), and the space swept upon a movement of the parallel links (26) is at least partly in a horizontal plane with the transverse bearer (16a, 16b).

2. A working machine according to claim 1 **characterised in that** the parallel links (26) are guided at least in a region-wise manner between two transverse bearers (16a, 16b).

3. A working machine according to claim 1 or claim 2 **characterised in that** one or more hydraulic cylinders (18) are secured at the machine end to a transverse bearer (16a, 16b) or the body of the working machine and at the wheel end to the wheel support housing (24).

4. A working machine according to one of claims 1 to 3 **characterised in that** the wheels secured to the wheel support housings (24) are drivable by way of telescopic shafts, the rotary movement of which can be transmitted to the wheel discs by way of gears arranged in the wheel support housing (24).

5. A working machine according to one or more of claims 1 to 4 **characterised in that** the wheels secured to the wheel support housings (24) are drivable by way of hydraulic or electric wheel hub motors and the drive power can be transmitted by way of flexible hoses or cables.

6. A working machine according to one or more of claims 1 to 5 **characterised in that** the outer end regions of a transverse bearer (16a, 16b) are in a higher horizontal plane than the central parts of a transverse bearer (16a, 16b).

7. A working machine according to one or more of claims 1 to 6 **characterised in that** the adjustment travel of the parallel links (24) is limited by abutments which have impact-elastic means.

8. A working machine according to one or more of claims 1 to 7 **characterised in that** arranged in the hydraulic circuit for adjustment of the hydraulic cylinders (18) are means which smooth impact loadings.

9. A working machine according to one or more of claims 1 to 8 **characterised in that** sliding surfaces are arranged between the parallel links (24) and the surfaces, which are towards the parallel links, of the transverse bearers (16a, 16b).

10. A working machine according to one or more of claims 1 to 9 **characterised in that** the hydraulic cylinder or cylinders (18) are disposed at least partly laterally in a horizontal position with respect to the transverse bearer (16a, 16b).

## Revendications

1. Machine agricole comportant un châssis de véhicule, un poste de conduite, un moteur d'entraînement, un essieu avant et un essieu arrière ainsi que des organes de travail agricole, au moins un des essieux comportant un dispositif de réglage à commande hydraulique afin de compenser au moins partiellement une pente de coteau, le dispositif de réglage comprenant au moins deux bras parallèles qui, côté machine sont montés chacun avec possibilité de pivotement autour d'un axe de rotation et côté roue agissent sur un corps d'essieu mobile dans l'espace,
**caractérisée par le fait que**
les bras parallèles (26), côté machine, sont fixés à au moins une traverse (16a, 16b), sur le côté par rapport à la dimension longitudinale de celle-ci, qui s'étend transversalement essentiellement sur toute la largeur du châssis de machine, de manière telle que ladite traverse supporte les longerons (12) de la caisse de la machine de travail (10) et que l'espace balayé au cours d'un déplacement des bras parallèles (26) est situé au moins partiellement dans un plan horizontal avec la traverse (16a, 16b).

2. Machine agricole selon la revendication 1, **caractérisée par le fait que** les bras parallèles (26) passent au moins localement entre deux traverses (16a, 16b).

3. Machine de travail selon la revendication 1 ou 2, **caractérisée par le fait qu'**un ou plusieurs vérins hydrauliques (18) est/sont fixé(s) côté machine à une traverse (16a, 16b) ou à la caisse de la machine de travail et côté roue au corps d'essieu (24).

4. Machine de travail selon la revendication 1 ou 2, **caractérisée par le fait que** les roues fixées au corps d'essieu (24) sont entraînées par des arbres télescopiques, dont la rotation est transmise au plateau de roue par l'intermédiaire de pignons situés dans le corps d'essieu (24).

5. Machine de travail selon une ou plusieurs des revendications 1 à 4, **caractérisée par le fait que** les roues fixées au corps d'essieu (24) sont entraînées par des moteurs de moyeu hydrauliques ou électriques et que l'énergie d'entraînement est transmise par des conduites flexibles ou des câbles.

6. Machine de travail selon une ou plusieurs des revendications 1 à 5, **caractérisée par le fait que** les parties d'extrémité extérieures d'une traverse (16a, 16b) sont situées dans un plan horizontal plus élevé que la partie médiane d'une traverse (16a, 16b).

7. Machine de travail selon une ou plusieurs des revendications 1 à 6, **caractérisée par le fait que** la course de réglage des bras parallèles (24) est limitée par des butées qui comportent des moyens résilients.

8. Machine de travail selon une ou plusieurs des revendications 1 à 7, **caractérisée par le fait qu'**il est prévu dans le circuit hydraulique pour le réglage des vérins hydrauliques (18) des moyens qui amortissent les chocs.

9. Machine de travail selon une ou plusieurs des revendications 1 à 8, **caractérisée par le fait que** des surfaces de glissement sont aménagées entre les bras parallèles (24) et les surfaces des traverses (16a, 16b) tournées vers lesdits bras parallèles (24).

10. Machine de travail selon une ou plusieurs des revendications 1 à 8, **caractérisée par le fait que** le ou les vérin(s) hydraulique(s) (18) sont situés partiellement sur le côté dans une position horizontale par rapport ) la traverse (16a, 16b).
